Europäisches Patentamt

European Patent Office

Office européen des brevets

(11) Publication number: **0 134 109**
**B1**

# EUROPEAN PATENT SPECIFICATION

(45) Date of publication of patent specification: **17.01.90**

(51) Int. Cl.⁵: **G 07 F 7/10**

(21) Application number: **84305196.2**

(22) Date of filing: **31.07.84**

(54) Automatic transaction system.

(30) Priority: **01.08.83 JP 139504/83**

(43) Date of publication of application:
**13.03.85 Bulletin 85/11**

(45) Publication of the grant of the patent:
**17.01.90 Bulletin 90/03**

(84) Designated Contracting States:
**DE FR GB NL**

(56) References cited:
**EP-A-0 072 759**
**WO-A-82/02446**
**GB-A-2 107 500**

**IEEE SPECTRUM FEBRUARY 1984 Dr. Stephen B. Weinberg "Smart credit cards: The answer to cashless shopping", page 43-49**

(73) Proprietor: **Oki Electric Industry Company, Limited**
**7-12, Toranomon 1-chome Minato-ku Tokyo 105 (JP)**

(72) Inventor: **Okada, Toshihiko**
**Oki Electric Ind. Co. Ltd 7-12 Toranomon 1-chome**
**Minato-ku Tokyo (JP)**

(74) Representative: **Corin, Christopher John et al Mathisen Macara & Co. The Coach House 6-8 Swakeleys Road**
**Ickenham Uxbridge UB10 8BZ (GB)**

## Description

The present invention relates to an automatic transaction system for automatic transaction apparatus for deposit and/or payment of cash and the like, in which a transaction can be performed with safety by using ID cards.

In the conventional automatic transaction apparatus, whether or not the transaction is correct is judged by the automatic transaction apparatus based on data carried on a magnetic card, and then, the intended transaction is performed. Even in the case where data of a magnetic card are ciphered, judgement of the rightness of the transacton is made by the automatic transaction apparatus or an apparatus connected to a circuit thereof. This conventional automatic transaction apparatus has the following defects.

Since a technical operator or expert on the automatic transaction apparatus knows the contents of data, he can perform a wrongful transaction. Furthermore, the contents of data can be known from a magnetic card according to the present advanced technique, and therefore, a stolen card or lost card can be used.

WO—A—8,202,446 discloses an automatic transaction system for performing transactions, the system comprising a centre apparatus containing customers' data files, automatic transaction apparatus and ID cards each of which can be inserted into any one of the automatic transaction apparatus, each ID card comprising an integrated circuit for storing and carrying out a programme involving editing, ciphering, operation and checking of data for producing information to be transmitted via the automatic transaction apparatus to the centre apparatus to enable the centre apparatus to produce a judgement as to whether or not a transaction should be made.

As well as storing identity data unique to the holder, which is transmitted to the automatic transaction apparatus, the ID card disclosed in this reference also has a keyboard to allow the user to enter an "individualization code". The programme stored in the ID card then operates on both the identity data and this code to produce the information which is transmitted via the automatic transaction apparatus to the centre apparatus to allow the required judgement to be made. Therefore this reference overcomes the problems relating to security of data by the use of the keyboard and individualization code. The identification data is stored in the automatic transaction apparatus during the operation.

By contrast the present invention is characterised in that the programme stored in the integrated circuit of the ID card involves all the ciphering operations and that the centre apparatus is adapted to transmit to the ID card data or processing instructions in response to a signal from the automatic transaction apparatus indicating that a card has been inserted into the apparatus, so that no identification data from an ID card is ever required to be stored in the automatic transaction apparatus in a form in which it is easily intelligible to third parties.

In accordance with the invention only the centre apparatus and the ID card take part in the judgement so that the manufacturers of the automatic transaction apparatus are totally excluded from any involvement in the issue of ID cards or the programmes for making the required judgements. A further advantage is that the programme used in the ID card can be changed by means of fresh processing instructions transmitted from the centre apparatus so that even if a third person does obtain details of the programme processing, these can be changed without involving any modification to the automatic transaction apparatus.

An embodiment of the invention will now be described, by way of example only, with reference to the accompanying diagrammatic drawings in which:

Fig. 1 is a plan view showing an ID card having an IC built therein;

Fig. 2 is a diagram illustrating the structure of an apparatus for the automatic transaction system of the present invention; and

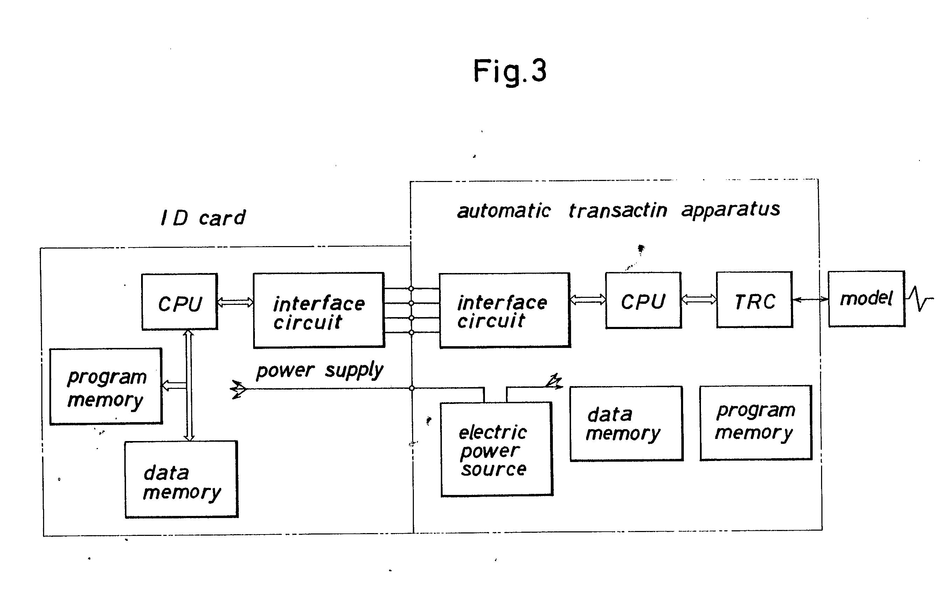

Fig. 3 is a diagram illustrating a circuit structure.

Reference numeral 10 represents an ID card and reference numeral 12 represents an IC for storing programs of editing, ciphering, operation and checking of data necessary for customer's transactions and practicing program processings. The IC 12 has a microprocessor, (hereinafter referred to as "CPU"), a program for the microprocessor, a read-only memory (hereinafter referred to as "ROM") for storing the working program, a memory for storing instructions or data received from an automatic transaction apparatus and a memory which is used during the processing. The IC 12 is actuated by an external power source or the like to perform the processing operation. Reference numeral 14 represents a connection portion between the IC 12 and other apparatus, that is, an automatic transaction machine in which the ID card 10 is inserted.

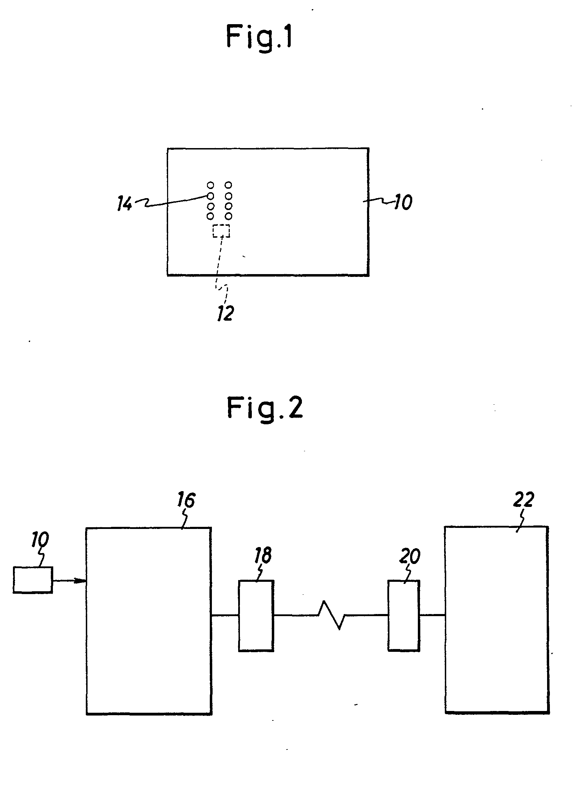

In Fig. 2 reference numeral 16 represents an automatic transaction apparatus in which the ID card 10 is inserted to effect depository and disbursement of bills. Each of reference numerals 18 and 20 represents a circuit control unit and reference numeral 22 represents a centre apparatus having customer's data files.

The operation according to the automatic transaction system of the present invention will now be described.

When the ID card 12 is inserted in the automatic transaction apparatus 16, the connecting portion 14 of the IC 12 of the ID card 10 is connected to the automatic transaction apparatus 16 and a signal of completion of insertion of the ID card 10 is transmitted to the centre apparatus 22 through the circuit control units 18 and 20.

The centre apparatus 22 which has received the signal of completion of insertion of the ID card 10 transmits instructions of a processing program for confirming the rightness of the transaction to the automatic transaction apparatus 16 and the ID card 10 through the circuit control units 18 and 20.

The program processing of the ID card 10 is performed by the IC 12 built in the ID card 10. Namely, the processing instruction of the centre apparatus 22 is put in an interface circuit of the IC 12 from an interface circuit of the automatic transaction apparatus 16 through the connection portion 14. Power is supplied to the IC 12 from the automatic transaction apparatus 16 and the CPU of the IC 12 begins practice of the program stored in ROM. According to this program, in order to obtain data having a specific relation to the ID number, which are necessary for judging the rightness of the transaction, operations are carried out on the data read out from the data memory of the IC 12, such as addition or subtraction, and editing such as listing or ciphering by a specific algorithm. In order to prevent decipherment of the ID number, it is preferred that this operation, editing or ciphering be complicated.

The contents of the processing data of the IC 12 of the ID 10 are transmitted from the interface portion to the automatic apparatus 16, and the apparatus 16 transmits the data directly to the centre apparatus 22. On receipt of the data of the IC 12, the centre apparatus 22 deciphers the data and judges whether or not the transaction is possible. If it is judged that the transaction is possible, the instruction to carry out the transaction is transmitted to the automatic transaction apparatus 16. According to the instruction form the centre apparatus 22 the automatic transaction apparatus 16 performs the transaction.

As is apparent from the foregoing description, even if the automatic transaction apparatus 16 does not perform the processing or judging whether the transaction is possible or not, the safety of the transaction can be increased.

As described in detail hereinbefore, at least one IC is built into an ID card and a centre apparatus having the above-mentioned functions is used. By dint of this structural feature, the following effects can be attained.

In the first place, since the judgement of the rightness of the transaction is performed by the IC and centre apparatus instead of the automatic transaction apparatus which is used for this purpose according to the conventional technique, a technical operator or expert on the maker side does not participate in issuance of ID cards or formation of processing programs for the centre apparatus, and hence, the effect of improving the secrecy of transaction data in a company or financial agency using the automatic transaction apparatus can be attained.

In the second place, since the working method can be changed during the working of the automatic transaction apparatus, even if a third person becomes aware of transaction data, they can be immediately changed and the safety of the working of the automatic transaction apparatus can be increased.

In the third place, since an information judging mechanism need not be attached to the automatic transaction apparatus, the structure of the automatic transaction apparatus can be simplified.

In the fourth place, since the contents of data transmitted between the ID card and centre apparatus cannot be known, wrongful working by a technical operator or expert on the maker side or other third person can be prevented, and hence, the working safety can be increased.

As is seen from the foregoing description, the present automatic cash transaction system is practically very advantageous for a financial agency or the like.

**Claim**

An automatic transaction system for performing transactions, the system comprising a centre apparatus (22) containing customers' data files, automatic transaction apparatus (16) and ID cards (10), each of which can be inserted into any one of the automatic transaction apparatus (16), each ID card comprising an integrated circuit (12) for storing and carrying out a programme involving editing, ciphering, operation and checking of data for producing information to be transmitted via the automatic transaction apparatus (16) to the centre apparatus (22) to enable the centre apparatus (22) to produce a judgement as to whether or not a transaction should be made, characterised in that the programme stored in said integrated circuit (12) involves all the ciphering operations and that the centre apparatus (22) is adapted to transmit to the ID card (10) data or processing instructions in response to a signal from the automatic transaction apparatus (16) indicating that a card (10) has been inserted into the apparatus (16), so that no identification data from an ID card is ever required to be stored in the automatic transaction apparatus in a form in which it is easily intelligible to third parties.

**Patentanspruch**

Selbsttätiges Überweisungssystem zur Durchführung von Bargeschäften mit einer Zentrale (22), an der die Daten der Kunden gespeichert sind, mit selbsttätigen Übertragungsgeräten (16) und Identifizierungskarten (10), die je in eines der selbsttätigen Übertragungsgeräte (16) eingeführt werden können und eine integrierte Schaltung (12) zum Speichern und Ausführen eines Programmes enthalten, in dem Daten ausgegeben, codiert, bearbeitet und geprüft werden, um Informationen über das selbsttätige Übertragungsgerät (16) zur Zentrale (22) zu übermitteln, damit diese (22) zu einer Beurteilung instandgesetzt wird, ob ein Bargeschäft vorgenommen werden soll oder nicht, dadurch gekennzeichnet, daß das in der integrierten Schaltung (12) gespeicherte Programm alle Codiervorgänge umschließt, und

3

daß von der Zentrale (22) zu der Identifizierungskarte (10) Daten oder Bearbeitungsbefehle in Abhängigkeit von einem Signal aus dem selbsttätigen Übertragungsgerät (16) übertragbar sind, das anzeigt, daß eine Karte (10) in das Übertragungsgerät (16) eingeführt ist, so daß, keine der Identifizierung dienenden Daten aus der Identifizierungskarte jemals in dem selbsttätigen Übertragungsgerät in einer Form gespeichert zu werden brauchen, in der sie leicht einer dritten Person zugänglich wären.

**Revendication**

Système à transactions automatiques pour exécuter des transactions, le système comprenant un dispositif central (22) contenant des fichiers de données des clients, des appareils à transactions automatiques (16) et des cartes d'identification ID (10) dont chacune peut être insérée dans n'importe lequel des appareils à transactions automatiques (16), chaque carte ID comprenant un circuit intégré (12) pour mémoriser et exécuter un programme impliquant la mise en forme, le chiffrement, le traitement et le contrôle de données afin de produire des informations à transmettre par l'intermédiaire de l'appareil à transactions automatiques (16) au dispositif central (22) pour permettre au dispositif central (22) de prendre une décision quant au fait qu'une transaction doit être faite ou non, caractérisé en ce que le programme mémorisé dans le circuit intégré (12) implique l'ensemble des opérations de chiffrement et en ce que le dispositif central (22) est agencé pour transmettre à la carte ID (10) des données ou des instructions de traitement en réponse à un signal provenant de l'appareil à transactions automatiques (16) indiquant qu'une carte (10) a été insérée dans l'appareil (16), de sorte qu'il n'est pas nécessaire que des données d'identification provenant d'une carte ID soient mémorisées dans l'appareil à transactions automatiques sous une forme où elles sont intelligibles pour des tiers.

## Fig.1

14 —～                    ～—10

12

## Fig.2

10          16              18                    20          22

# Fig.3

ID card | automatic transactin apparatus

CPU ⟷ interface circuit ⟷ interface circuit ⟷ CPU ⟷ TRC ⟵ model

program memory

power supply

data memory

electric power source

data memory

program memory

EP 0 134 109 B1